# EUROPÄISCHE PATENTSCHRIFT

(11) **EP 3 191 245 B1**
(45) Veröffentlichungstag und Bekanntmachung des Hinweises auf die Patenterteilung: **29.08.2018**
(21) Anmeldenummer: 15757532.5
(22) Anmeldetag: 08.09.2015
(51) Int. Cl.: B23B 31/167

(54) **SPANNFUTTER**
CHUCK
MANDRIN DE SERRAGE

(30) Priorität: 08.09.2014 DE 102014112908
(43) Veröffentlichungstag der Anmeldung: 19.07.2017
(73) Patentinhaber: Schunk GmbH & Co. KG Spann- und Greiftechnik, 74348 Lauffen (DE)
(72) Erfinder: DAMANG, Markus, 72458 Albstadt (DE)
(74) Vertreter: Albrecht, Ralf
(86) Internationale Anmeldenummer: PCT/EP2015/070515
(87) Internationale Veröffentlichungsnummer: WO 2016/038046

(56) Entgegenhaltungen:
- WO-A1-2004/056516
- DE-A1- 3 834 735
- DE-A1- 4 335 896
- DE-A1- 19 930 784

## Beschreibung

Die vorliegende Erfindung betrifft ein Spannfutter gemäß dem Oberbegriff des unabhängigen Anspruchs 1 mit einem Futterkörper, der eine Futterachse definiert, mehreren radial zu der Futterachse verlaufenden Führungsnuten, die in einer vorderen Stirnfläche des Futterkörpers ausgebildet sind und zur Aufnahme von Spannbacken dienen, einem Keilstangenmechanismus zur Betätigung der Spannbacken mit mehreren Keilstangen, die in quer zu den Führungsnuten verlaufenden Keilstangentaschen des Futterkörpers geradlinig bewegbar geführt und durch einen Antrieb in einem Arbeitsbereich zwischen einer inneren Arbeitsstellung, die einer inneren Spannstellung der Spannbacken entspricht, und einer äußeren Arbeitsstellung, die einer äußeren Spannstellung der Spannbacken entspricht, verstellbar sind, wobei die Keilstangen an ihrer vorderen Stirnfläche eine schrägverzahnte Zahnleiste aufweisen, die mit einer korrespondierenden Verzahnung einer in die entsprechende Führungsnut eingesetzten Spannbacke in Eingriff steht bzw. bringbar ist, um eine Bewegung der Keilstangen in eine Radialbewegung der Spannbacken umzusetzen, und wobei den Keilstangen jeweils ein Sicherungsmechanismus zugeordnet ist, der in der Weise ausgebildet ist, dass eine Keilstangen und eine zugehörige Spannbacke nur in oder außer Eingriff gebracht werden können, wenn die Keilstange über den Antrieb in ihre äußere Arbeitsstellung verfahren sind und zusätzlich manuell ein in dem Futterkörper drehbar gehaltener Ausklinkbolzen des zugeordneten Sicherungsmechanismus mittels eines entsprechenden Ausklinkschlüssels, der von außen mit dem Ausklinkbolzen in Eingriff gebracht wird, aus einer Ausgangsstellung in eine Freigabestellung verdreht wird.

Spannfutter dieser Art sind bekannt und werden in der Praxis in erster Linie an Werkzeugmaschinen und hier insbesondere Drehmaschinen eingesetzt, um die zu bearbeitenden Werkstücke zu spannen. Die Spannfutter, welche auch Keilstangenfutter genannt werden, besitzen einen formsteifen Futterkörper, der eine zentrale Aufnahmeöffnung für die Werkstücke aufweist, sowie mehrere Spannbacken, die in radialen Führungsnuten des Futterkörpers gemeinsam verstellbar sind. Neben manuell betätigbaren Handspannfuttern werden in komplexeren Werkzeugmaschinen, insbesondere in Programm gesteuerten Werkzeugmaschinen, häufig sogenannte Kraftspannfutter eingesetzt, bei denen die von den Spannbacken auf das Werkstück ausgeübten Spannkräfte motorisch oder hydraulisch erzeugt werden.

Aus der EP 1 572 403 B1 ist beispielsweise ein Kraftspannfutter bekannt, das nach dem Prinzip sich gradlinig bewegender Keilstangen arbeitet, die in quer zu den Führungsnuten für die Spannbacken vorgesehenen Keilstangentaschen bewegbar geführt sind. Die Keilstangen, welche durch einen im Futterkörper angeordneten Zylinder angetrieben werden, sind mit den Spannbacken über Schrägverzahnungen derart gekoppelt, dass die tangentialen Bewegungen der Keilstangen in den Keilstangentaschen in radiale Spannbewegungen der Spannbacken umgesetzt werden.

Bei dem bekannten Kraftspannfutter sind die Keilstangen zweiteilig ausgeführt und bestehen aus einem Keilstangenkörper, der in die zugehörige Keilstangentasche eingesetzt ist, und einen Kupplungsaufsatz, an dem die mit der Spannbacke in Eingriff kommende Verzahnung ausgebildet ist. Der Kupplungsaufsatz kann dabei in Richtung der Futterachse zwischen einer Arbeits- oder Kupplungsstellung, in welcher seine Verzahnung mit der entsprechenden Gegenverzahnung der Spannbacke in Eingriff befinden, und einer unteren Backenwechselstellung, in welcher sich die Verzahnungen außer Eingriff stehen, so dass die Spannbacke aus der Führungsnut gezogen werden kann, verstellt werden. Hierzu ist ein Stellorgan in der Form eines Exzenterbolzens vorgesehen, der in einer Querbohrung des Keilstangenkörpers drehbar gelagert und von außen mittels eines Ausklinkschlüssels über einen Ausklinkbolzen, der in dem Futterkörper drehbar gelagert ist, verdrehbar ist. Ferner ist ein Sicherungsmechanismus vorgesehen, welcher ein Abziehen des Ausklinkschlüssels von dem Futterkörper nur dann ermöglicht, wenn in die entsprechende Führungsnut des Führungskörpers eine Spannbacke in vorgeschriebener Weise eingesetzt ist.

Ein Spannfutter gemäß dem Oberbegriff des unabhängigen Anspruchs 1 ist ferner aus der DE 199 30 784 A1 bekannt. Dieses umfasst einen Futterkörper, der eine Futterachse definiert, und mehrere radial zu der Futterachse verlaufende Führungsnuten, die in der vorderen Stirnfläche des Futterkörpers ausgebildet sind. In die Führungsnuten sind Spannbacken eingesetzt, die über einen Keilstangenmechanismus zwischen einer inneren Arbeitsstellung, die einer innere Spannstellung der Spannbacken entspricht, und einer äußeren Arbeitsstellung, die einer äußeren Spannstellung der Spannbacken entspricht, verstellbar sind. Die Keilstangen weisen an ihrer vorderen Stirnfläche eine schräg verzahnte Zahnleiste auf, die mit einer korrespondierenden Verzahnung einer in die entsprechende Führungsnut eingesetzten Spannbacke in Eingriff steht, um eine Bewegung der Keilstangen in eine radiale Bewegung der Spannbacken umzusetzen. Den Keilstangen ist jeweils ein Sicherungsmechanismus zugeordnet, der in der Weise ausgebildet ist, dass eine Keilstange und eine zugehörige Spannbacke nur in und außer Eingriff gebracht werden können, wenn die Keilstangen über den Antrieb in ihre äußere Arbeitsstellung verfahren sind und zusätzlich manuell ein in dem Futterkörper drehbar gehaltener Ausklinkbolzen des zugeordneten Sicherungsmechanismus mittels eines entsprechenden Ausklinkschlüssels aus einer Ausgangsstellung in eine Freigabestellung verdreht wird.

Das vorbekannte System hat sich in der Praxis durchaus bewährt. Allerdings wird als nachteilig empfunden, dass die Keilstange sowie der Sicherungsmechanismus aus einer Vielzahl von Bauteilen bestehen, so dass insgesamt der Aufbau kompliziert und aufwändig ist.

Aufgabe der vorliegenden Erfindung ist es daher, ein Spannfutter der eingangs genannten Art anzugeben, welches einen vergleichsweise einfachen Aufbau besitzt und gleichzeitig eine hohe Betriebssicherheit gewährleistet.

Diese Aufgabe ist erfindungsgemäß durch ein Spannfutter mit den Merkmalen des unabhängigen Anspruchs 1 gelöst. Bei dem erfindungsgemäßen Spannfutter ist der Ausklinkbolzen in einer Haltebohrung des Futterkörpers, die sich in der Längsrichtung der korrespondierenden Keilstange erstreckt, um seine Längsachse drehbar aber axialfest angeordnet. Ferner greift ein in das Innere des Futterkörpers weisender Endabschnitt des Ausklinkbolzens in eine Aufnahmebohrung der zugehörigen Keilstange drehbar ein, wobei in der Umfangsfläche des Endab-schnitts eine Steuernut ausgebildet ist, die mit einem in der Keilstange gehaltenen und in die Aufnahmebohrung ragenden Steuerstift derart in Eingriff steht, dass eine Drehung des Ausklinkbolzens aus seiner Ausgangsstellung in seine Freigabestellung dazu führt, dass die Keilstange aus ihrem Arbeitsbereich über die äußere Arbeitsstellung hinaus hinter der Spannbacke in eine Backenwechselstellung soweit weggezogen wird, dass die Zahnleiste der Keilstange außerhalb des Bereiches der Führungsnut liegt und somit eine Spannbacke aus der Führungsnut gezogen oder in die Führungsnut eingesetzt werden kann. Der Sicherungsmechanismus weist Arretierungsmittel auf, die verhindern, dass die Keilstange aus ihrer Backenwechselstellung durch Drehen des Ausklinkbolzens wieder in ihre äußere Arbeitsstellung gebracht wird, ohne dass eine Spannbacke in die Führungsnut eingesetzt ist.

Der Erfindung liegt damit die Überlegung zugrunde, die Keilstange für einen Backenwechsel in der zugehörigen Keilstangentasche über ihre äußere Arbeitsstellung hinaus in die Backenwechselstellung zu ziehen, um einen Backenwechsel vornehmen zu können. In dieser Backenwechselstellung wird die Keilstange dann durch den erfindungsgemäß vorgesehenen Sicherungsmechanismus gehalten. Auf diese Weise können die Keilstangen einteilig ausgebildet sein, was gegenüber den aus dem Stand der Technik bekannten zweiteiligen Keilstangen eine erhebliche Vereinfachung darstellt.

Die Betätigung der Keilstange erfolgt dabei durch manuelles Drehen eines Ausklinkbolzens mittels eines Ausklinkschlüssels, der von außen auf den Ausklinkbolzen gesteckt wird, über den Eingriff eines in der Keilstange gehaltenen Steuerstiftes mit einer in dem Ausklinkbolzen ausgebildeten Steuernut. Der Steuerstift erstreckt sich dabei in bevorzugter Weise von der hinteren Stirnfläche der Keilstange in die Aufnahmebohrung.

Gemäß einer Ausführungsform der Erfindung ist vorgesehen, dass eine Drehung des Ausklinkbolzens aus der Ausgangsstellung in die Freigabestellung in einem ersten Drehbereich dazu führt, dass die Keilstange aus ihrer äußeren Arbeitsstellung in die Backenwechselstellung bewegt wird, und ein Weiterdrehen des Ausklinkbolzens innerhalb eines zweiten Drehbereichs in die Freigabestellung keine weitere Verstellung der Keilstange in der Keilstangentasche nach sich zieht.

Hierzu kann vorgesehen sein, dass die Steuernut einen ersten Nutabschnitt, der sich in der Weise wendelartig entlang eines Umfangsabschnitts des inneren Endabschnitts des Ausklinkbolzens erstreckt, dass die zugehörige Keilstange bei einer Drehung des Ausklinkbolzens in der Keilstangentasche zwischen der äußeren Arbeitsstellung und der Backenwechselstellung bewegt wird, und einen zweiten Nutabschnitt, welcher sich an den ersten Nutabschnitt anschließt und sich in Umfangsrichtung des Ausklinkbolzens erstreckt, so dass eine weitere Drehung des Ausklinkbolzens in die Freigabestellung zu keiner Bewegung der Keilstange der zugehörigen Keilstangentasche führt, aufweist.

Gemäß einer Weiterbildung der Erfindung ist vorgesehen, dass die Arretierungsmittel einen Arretierungsstift aufweisen, der in einer sich in Futterachsrichtung erstreckenden und zur vorderen Stirnfläche der Keilstange offenen Bohrung der Keilstange verschiebbar zwischen einer Arretierungsstellung, in welcher der Arretierungsstift nach vorne aus der Bohrung ragt, und einer abgesenkten Freigabestellung, in welcher der Arretierungsstift innerhalb der Bohrung positioniert ist, bewegbar gehalten ist, wobei elastische Druckmittel insbesondere in Form einer Schraubendruckfeder, die sich zwischen einem Boden der Bohrung und dem Arretierungsstift abstützen, vorgesehen sind, die den Arretierungsstift nach vorne aus der Keilstange in die Arretierstellung drücken, und wobei die Bohrung vor der Zahnleiste positioniert ist, so dass der Arretierungsstift in den Bereich der Führungsnut gedrückt wird, wenn sich die Keilstange in ihrer Backenwechselstellung befindet. Dabei sind bevorzugt an dem inneren Ende des Ausklinkbolzens Eingriffsmittel ausgebildet, die mit entsprechenden Eingriffselementen des Arretierungsstiftes in Eingriff kommen, wenn sich die Keilstange in ihrer Backenwechselstellung befindet, wobei dann eine Drehung des Ausklinkbolzens in die Freigabestellung durch den Eingriff in eine Absenkbewegung des Arretierungsstiftes in seine Freigabestellung umgesetzt wird.

In bevorzugter Weise ist in dem Arretierungsstift eine Vertiefung ausgebildet, ist die Bohrung zu einer Seitenfläche begrenzenden Wandung der Keilstange mit einer Durchgangsöffnung versehen, und ist in einer der Seitenflächen der Keilstange zugeordneten Seitenwand der entsprechenden Keilstangentasche eine Ausnehmung ausgebildet, wobei die Vertiefung, die Durchgangsöffnung und die Ausnehmung gemeinsam eine Aufnahme bilden, wenn sich der Arretierungsstift in seiner Freigabestellung befindet, in welche eine Kugel eingesetzt ist, und wobei die Kugel durch den Arretierungsstift nach außen in den von der Durchgangsöffnung und der Ausnehmung in der Seitenwand der Keilstangentasche gebildeten Bereich der Aufnahme gedrückt wird, wenn sich der Arretierungsstift in seiner Arretierungsstellung befindet und somit seine Vertiefung gegenüber der Durchgangsöffnung der Ausnehmung versetzt ist, so dass dann die Kugel ein Verstellen der Keilstange in der Keilstangentasche verhindert.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine Ausführungsform eines erfindungsgemäßen Spannfutters mit eingesetzten Spannbacken in Draufsicht, wobei sich die Spannbacken/Keilstangen in ihrer äußeren Arbeitsstellung befinden,
- Figur 2: das Spannfutter aus Figur 1 mit einer entfernten Spannbacke,
- Figur 3: das Spannfutter aus Figur 1 mit freigelegten Keilstangentaschen,
- Figur 4: das Spannfutter aus Figur 1 in einer teilweise geschnittenen Seitenansicht entlang der Linie IV-IV in Figur 1,
- Figur 5: das Spannfutter aus Figur 1 in einer teilweise geschnittenen Seitenansicht entlang der Linie V-V in Figur 1,
- Figur 6: das Spannfutter aus Figur 1, in welchem eine Keilstange aus ihrem Arbeitsbereich hinaus in ihre Freigabestellung bewegt ist,
- Figur 7: das Spannfutter in einer teilweise geschnittenen Seitenansicht entlang der Linie VII-VII in Figur 6,
- Figur 8: das Spannfutter in einer teilweise geschnittenen Seitenansicht entlang der Linie VIII-VIII in Figur 6,
- Figur 9: das Spannfutter aus Figur 1 in Draufsicht mit teilweise zurückgedrehtem Ausklinkschlüssel und entfernter Spannbacke,
- Figur 10: das Spannfutter in einer teilweise geschnittenen Seitenansicht entlang der Linie X-X in Figur 9,
- Figur 11: das Spannfutter in einer teilweisen geschnittenen Seitenansicht entlang der Linie XI-XI in Figur 9,
- Figur 12: das Spannfutter, nachdem der Ausklinkschlüssel aus der in Figur 9 dargestellten Position im Uhrzeigersinn in seine Freigabestellung verdreht wurde, mit entfernter Spannbacke,
- Figur 13: das Spannfutter in einer teilweise geschnittenen Seitenansicht entlang der Linie XIII-XIII in Figur 12,
- Figur 14: das Spannfutter in einer teilweise geschnittenen Seitenansicht entlang der Linie XIV-XIV in Figur 12,
- Figur 15: das Spannfutter, nachdem in der Freigabestellung der Figuren 12 bis 14 eine Spannbacke in die Führungsnut eingesetzt und der Ausklinkschlüssel zurückgedreht wurde, in Draufsicht,
- Figur 16: das Spannfutter in einer teilweise geschnittenen Seitenansicht entlang der Linie XVI-XVI in Figur 15,
- Figur 17: das Spannfutter in einer teilweise geschnittenen Seitenansicht entlang der Linie XVII-XVII in Figur 15, und
- Figuren 18 bis 20: diverse Ansichten des Ausklinkbolzens des Spannfutters.

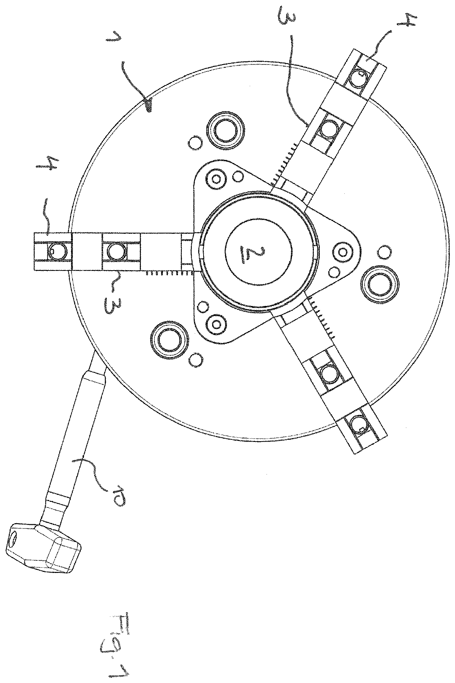

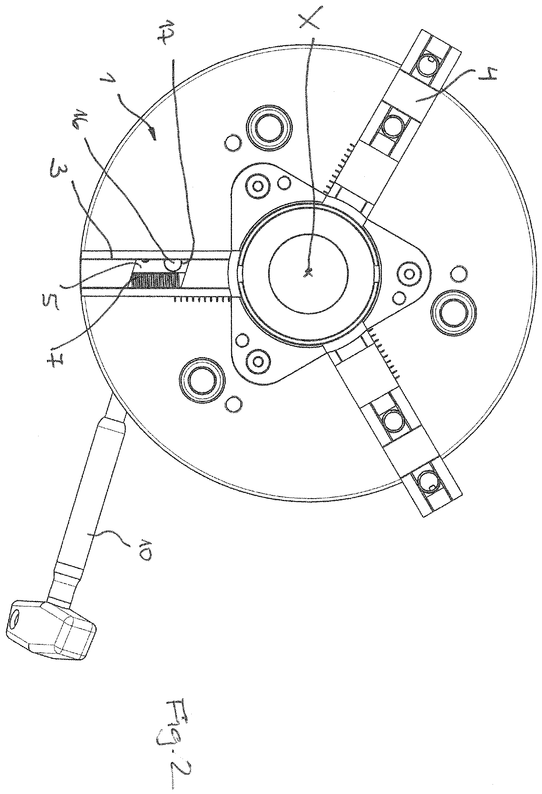

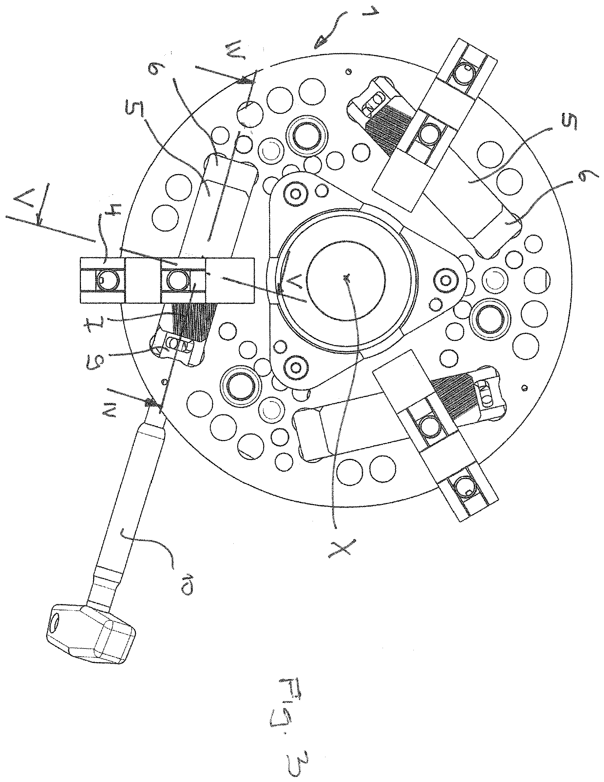

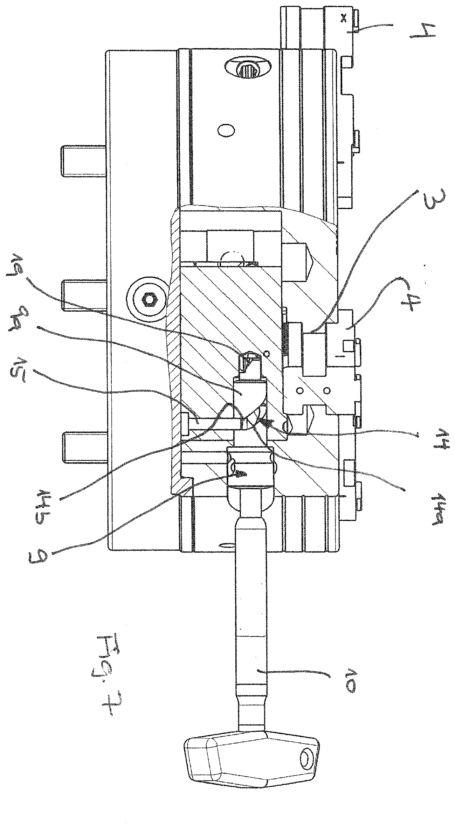

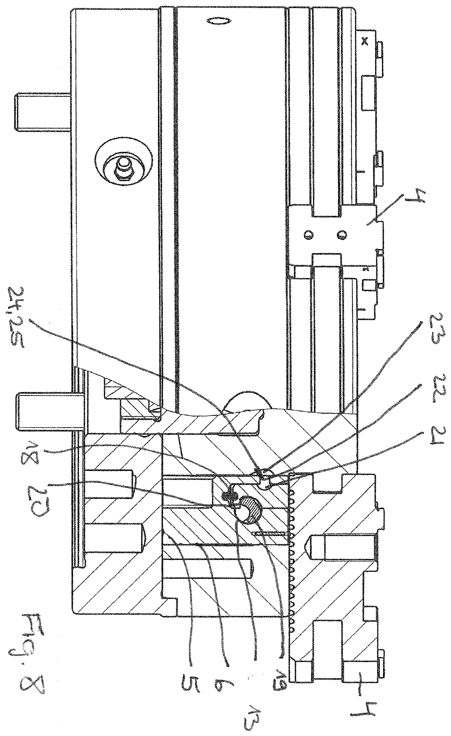

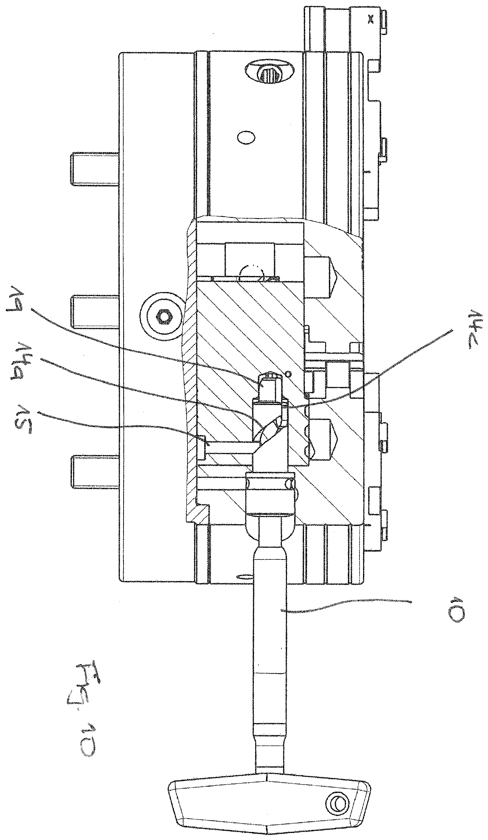

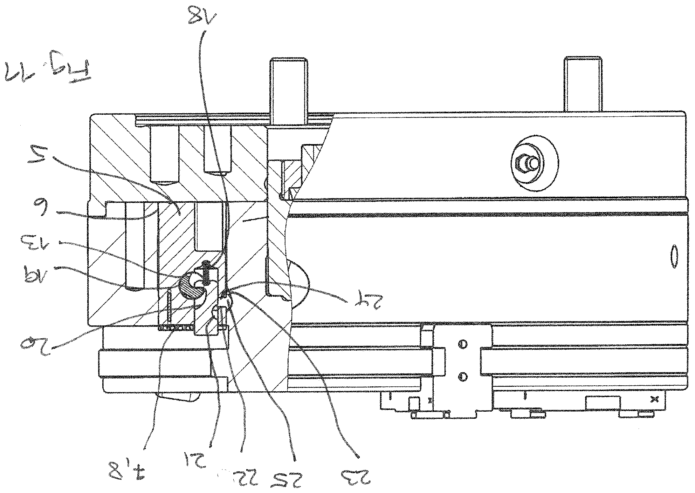

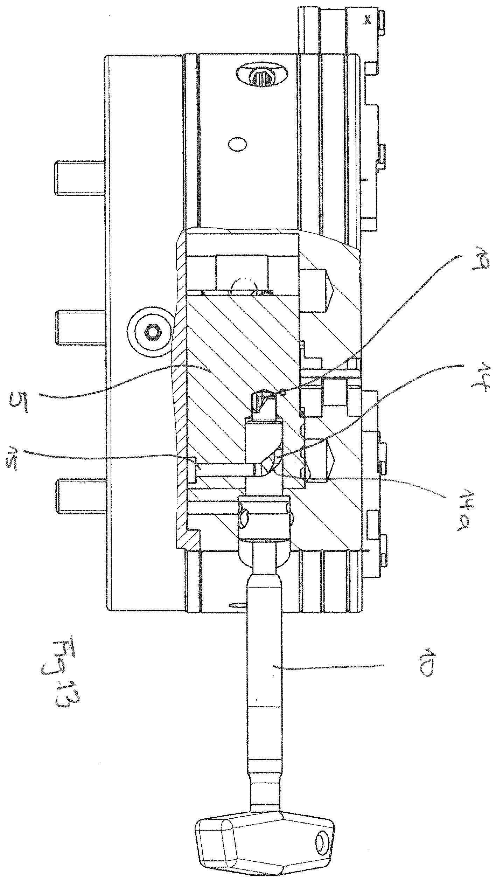

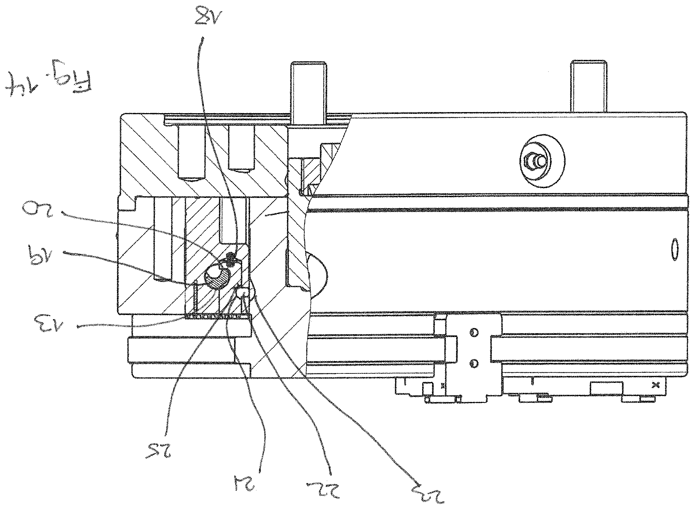

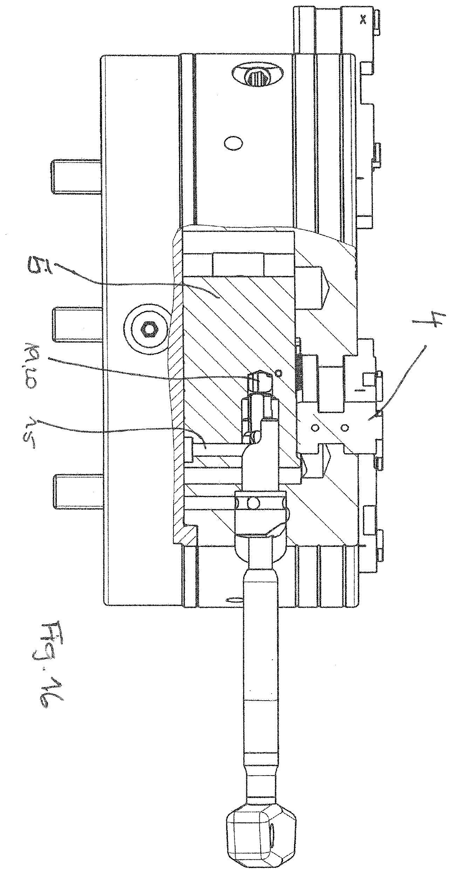

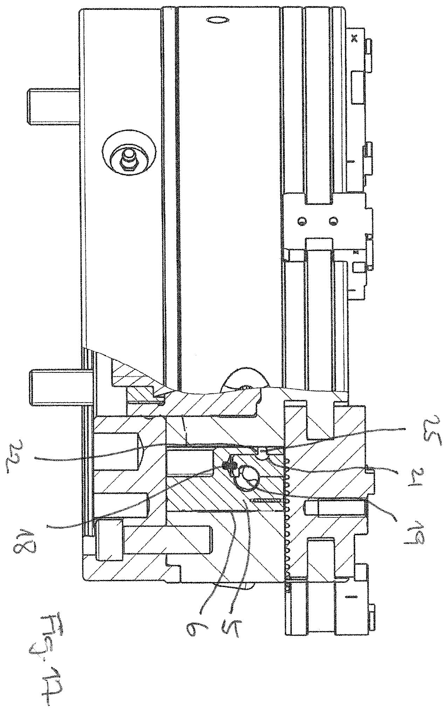

In den Figuren 1 bis 17 ist eine Ausführungsform eines Spannfutters gemäß der vorliegenden Erfindung dargestellt, das beispielsweise zum Spannen von Werkstücken an Drehmaschinen eingesetzt werden kann. Zu dem Spannfutter gehört ein Futterkörper 1 zylindrischer Grundform, der an seiner rückseitigen Endfläche an der nicht dargestellten Spindel einer Werkzeugmaschine befestigt werden kann. Der Futterkörper 1 definiert eine Futterachse X und weist einen zentralen Durchlass 2 auf, in den ein zu spannendes Werkstück eingesetzt werden kann.

Das dargestellte Spannfutter ist in herkömmlicherweise als Dreibackenfutter ausgebildet. Entsprechend sind an der vorderen Stirnfläche des Futterkörpers 1 drei radiale Führungsnuten 3 vorgesehen, die gleichmäßig über den Umfang verteilt, d.h. mit jeweils 120° Versatz gegeneinander angeordnet sind. In die Führungsnuten 3 sind Spannbacken 4 eingesetzt, die jeweils aus einer Grundbacke und einer daran anschraubbaren Aufsatzbacke bestehen können. In der Zeichnung ist jeweils nur die Grundbacke der Spannbacken 4 dargestellt. Die drei Spannbacken 4 können durch einen Keilstangenmechanismus zum Spannen und Lösen von Werkstücken gemeinsam nach innen und außen verstellt werden.

Zu diesem Keilstangenmechanismus gehören drei Keilstangen 5, die jeweils einer der Spannbacken 4 zugeordnet und in quer zu den Führungsnuten 3 verlaufenden Keilstangentaschen 6 des Futterkörpers 1 verstellbar geführt sind. Die Keilstangen 5 weisen an ihrer Stirnseite jeweils eine (schrägverzahnte) Zahnleiste 7 auf, die mit einer entsprechenden Verzahnung 8 an der zugeordneten Spannbacke 4 in Eingriff steht, um eine Bewegung der Keilstange 5 in der entsprechenden Keilstangentasche 6 in eine radiale Bewegung der Spannbacke 4 umzusetzen. Den Keilstangen 5 ist ein nicht dargestellter Antrieb zugeordnet, über welchen die Keilstangen 5 gemeinsam in einem Arbeitsbereich entlang der entsprechenden Keilstangentaschen 6 bewegt werden können, um die Spannbacken 4 gemeinsam in radialer Richtung zu verstellen.

In den Figuren 1 bis 5 befinden sich die Keilstangen 5 in ihrer äußeren Arbeitsstellung des Arbeitsbereiches, welche der voll ausgefahrenen Position der Spannbacken 4 entspricht.

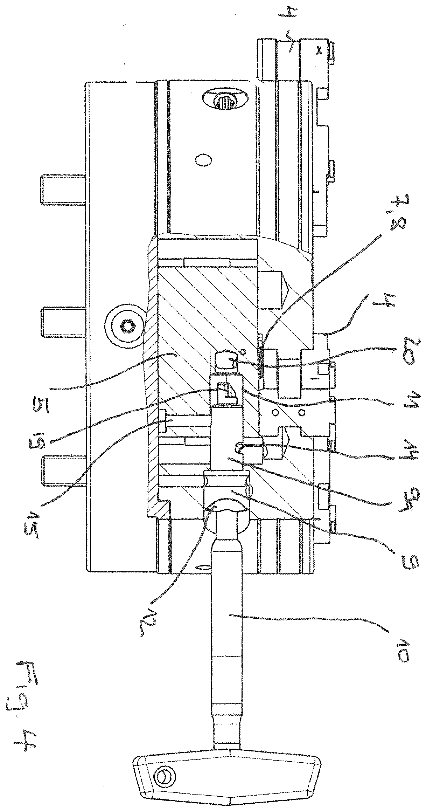

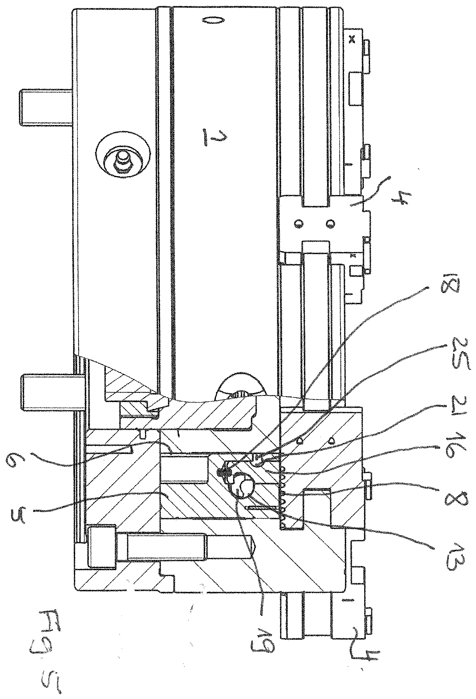

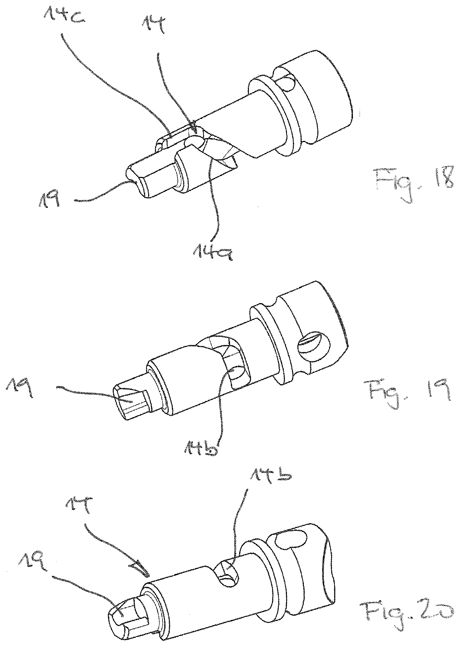

Den Keilstangen 5 ist weiterhin ein Sicherungsmechanismus zugeordnet, der in der Weise ausgebildet ist, dass eine Keilstange 5 und eine zugehörige Spannbacke 4 nur dann in und außer Eingriff gebracht werden können, wenn die Keilstangen 5 über den Antrieb in die in den Figuren 1 bis 5 dargestellte äußere Arbeitsstellung verfahren sind und zusätzlich ein in dem Futterkörper 1 drehbar gehaltener Ausklinkbolzen 9 des der Keilstange 5 zugeordneten Sicherungsmechanismus durch einen entsprechenden Ausklinkschlüssel 10, der von außen mit dem Ausklinkbolzen 9 in Eingriff gebracht wird, aus einer Ausgangsstellung in eine Freigabestellung verdreht wird. Wie insbesondere in den Figuren 4 und 5 erkennbar ist, ist der Ausklinkbolzen 9 einer Haltebohrung 11 des Futterkörpers 1, die sich in der Längsrichtung der korrespondierenden Keilstange 5 bzw. Keilstangentasche 6 erstreckt, um seine Längsachse drehbar, aber axialfest angeordnet. Dabei ist in der nach außen weisenden Stirnfläche des Ausklinkbolzens 9 eine Schlüsselfläche 12 ausgebildet, in welche ein entsprechendes Kupplungselement des Ausklinkschlüssels 10 - hier in der Form eines Sechskantkopfes - eingesteckt werden kann, wie dies in Figur 4 erkennbar ist. Ein in das Innere des Futterkörpers 1 weisender innerer Endabschnitt 9a des Ausklinkbolzens 9 greift in eine Aufnahmebohrung 13 der zugehörigen Keilstange 5 drehbar ein. Dabei ist in der Umfangsfläche des Endabschnitts 9a eine Steuernut 14 ausgebildet, die mit einem Steuerstift 15 in Eingriff steht, welcher in der zugehörigen Keilstange 5 gehalten ist und sich in die Aufnahmebohrung 13 erstreckt. In der Figur 4 ist gut erkennbar, dass der Steuerstift 15 sich ausgehend von der hinteren Endfläche der Keilstange 5 in die Aufnahmebohrung 13 erstreckt und dabei in Futterachsrichtung orientiert ist. Die Anordnung ist dabei so getroffen, dass durch den Eingriff zwischen der Steuernut 14 und dem Steuerstift 15 eine Drehung des Ausklinkbolzens 9 aus seiner Ausgangsstellung in seine Freigabestellung dazu führt, dass die Keilstange 5 aus ihrem Arbeitsbereich über die äußere Arbeitsstellung hinaus hinter der Spannbacke 4 in eine Backenwechselstellung soweit weggezogen wird, dass die Zahnleiste 7 der Keilstange 5 außerhalb des Bereiches der Führungsnut 3 liegt und damit außer Eingriff von der Verzahnung 8 der zugehörigen Spannbacke 4 kommt, so dass die Spannbacke 4 aus der Führungsnut 3 gezogen oder umgekehrt eine Spannbacke 4 in die Führungsnut 3 eingesetzt werden kann. Konkret besitzt die Steuernut 14 einen ersten Nutabschnitt 14a, der sich in der Weise wendelartig entlang eines Umfangsabschnitts des inneren Endabschnitts 9a des Ausklinkbolzens 9 erstreckt, dass die zugehörige Keilstange 5 bei einer Drehung des Ausklinkbolzens 9 in einem den ersten Nutabschnitt 14a entsprechenden ersten Drehbereich in der Keilstangentasche 6 zwischen der äußeren Arbeitsstellung und der Backenwechselstellung bewegt wird, und einen zweiten Nutabschnitt 14b, welcher sich an den ersten Nutabschnitt 14a anschließt und sich in Umfangsrichtung des Ausklinkbolzens 9 erstreckt, so dass eine weitere Drehung des Ausklinkbolzens 9 in die Freigabestellung zu keiner Bewegung der Keilstange 5 in der zugehörigen Keilstangentasche 6 mehr führt. Der erste Nutabschnitt 14a ist damit einem ersten Drehbereich des Ausklinkbolzens 9 zugeordnet und der zweite Nutabschnitt 14b ist einem zweiten Drehbereich des Ausklinkbolzens 9 zugeordnet. Die Ausgestaltung der Steuernut 14 ist insbesondere in den Figuren 18 bis 20 erkennbar. Die Figur 18 lässt ferner erkennen, dass sich an das innenseitige Ende des ersten Nutabschnitts 14a ein Nutabschnitt 14c anschließt, welcher sich in der Längsrichtung des Ausklinkbolzens 9 erstreckt. Über diesen Nutabschnitt 14c kann der Steuerstift 15 in Eingriff mit der Steuernut 14 gebracht werden.

Erfindungsgemäß weist der Sicherungsmechanismus ferner Arretierungsmittel auf, die verhindern, dass die Keilstange 5 aus ihrer Backenwechselstellung durch Drehung des Ausklinkbolzens 9 wieder in ihre äußere Arbeitsstellung gebracht wird, ohne dass eine Spannbacke 4 in die Führungsnut 3 eingesetzt ist. Die Arretierungsmittel umfassen einen Arretierungsstift 16, der in einer sich in Futterachsrichtung X erstreckenden und zur vorderen Stirnfläche der Keilstange 5 offenen Bohrung 17 der Keilstange 5 verschiebbar zwischen einer Arretierungsstellung, in welcher der Arretierungsstift 16 nach vorne aus der Bohrung 17 ragt, und einer abgesenkten Freigabestellung, in welcher der Arretierungsstift 16 vollständig innerhalb der Bohrung 17 positioniert ist, gehalten ist. Dabei sind in der Bohrung 17 elastische Druckmittel in der Form einer Schraubendruckfeder 18 angeordnet. Diese stützt sich zwischen einem Boden der Bohrung 17 und dem Arretierungsstift 16 ab und drückt den Arretierungsstift 16 nach vorne aus der Keilstange 5 in seine Arretierungsstellung. Die Bohrung 17 ist dabei innenseitig vor der Zahnleiste 7 positioniert, so dass der Arretierungsstift 16 in den Bereich der Führungsnut 3 gedrückt wird, wenn die Keilstange 5 in ihre Backenwechselstellung bewegt ist und sich keine Spannbacke 4 innerhalb der Führungsnut 3 befindet.

An dem inneren Ende des Ausklinkbolzens 9 sind Eingriffsmittel 19 ausgebildet, die mit entsprechenden Eingriffselementen 20 des Arretierungsstiftes 16 in Eingriff kommen, wenn sich die Keilstange 5 in ihrer Backenwechselstellung befindet. Wenn dann der Ausklinkbolzen 9 in seine Freigabestellung gedreht wird, führt der Eingriff zwischen den Eingriffsmitteln 19 des Ausklinkbolzens 9 und den Eingriffselementen 20 des Arretierungsstiftes 16 dazu, dass der Arretierungsstift 16 in seine Freigabestellung abgesenkt wird. In der dargestellten Ausführungsform werden die Eingriffselemente des Arretierungsstiftes 16 durch eine Ausnehmung 20 gebildet, in welche ein Betätigungsstift 19 als Eingriffsmittel am inneren Ende des Ausklinkbolzens 9 eingreift.

Wie insbesondere die Figuren 5, 8 und 11 erkennen lassen, ist in dem Arretierungsstift 16 auf dessen zur Futterachse X gerichteten Innenseite eine Vertiefung 21 ausgebildet. Ferner ist die seitliche Wandung der Keilstange 5, welche die Bohrung 17 zur Richtung der Futterachse X begrenzt, mit einer Durchgangsöffnung 22 versehen. Schließlich ist in der die seitliche Wandung der Keilstange 5 zugeordneten Seitenwand der entsprechenden Keilstangentasche 6 eine Ausnehmung 23 ausgebildet. Dabei überlagern sich die Vertiefung 21, die Durchgangsöffnung 22 und die Ausnehmung 23 einander, wenn sich der Arretierungsstift 16 in seiner abgesenkten Freigabestellung befindet, um gemeinsam eine Aufnahme 24 zu bilden, in welche eine Kugel 25 eingesetzt ist. Die Anordnung ist dabei so getroffen, dass die Kugel 25 in der Freigabestellung des Arretierungsstiftes 16 im Bereich der Durchgangsöffnung 22 und der Vertiefung 21 Platz findet, so dass die Keilstange 5 in der Keilstangentasche 6 verfahren werden kann. Wenn jedoch der Arretierungsstift 16 in seine Arretierungsstellung ausgefahren ist, befindet sich seine Vertiefung 21 nicht mehr in Überdeckung mit der Durchgangsöffnung 22 und der Ausnehmung 23, so dass die Kugel 25 nur noch in der Durchgangsöffnung 22 und der Ausnehmung 23 Platz findet und somit ein Verstellen der Keilstange 5 in der Keilstangentasche 6 verhindert.

Für einen Backenwechsel im Betrieb werden zunächst die Keilstangen 5 durch den ihnen zugeordneten Antrieb in ihre äußere Arbeitsstellung verfahren und damit die Spannbacken 4 in ihre äußere Arbeitsstellung bewegt. Anschließend wird der Ausklinkschlüssel 10 mit der einen auszuwechselnden Spannbacke 4 zugeordneten Ausklinkbolzen 9 in Eingriff gebracht (siehe Figuren 1 bis 5). In dieser Position wird der Arretierungsstift 16 durch die Spannbacke 4 in seine Freigabestellung niedergedrückt, so dass die Kugel 25 in dem von der Vertiefung 21 und der Durchgangsöffnung 22 gebildeten Teil der Aufnahme 24 gehalten wird. Ein Ausweichen nach außen wird durch die Seitenwand der Keilstangentasche 6 verhindert.

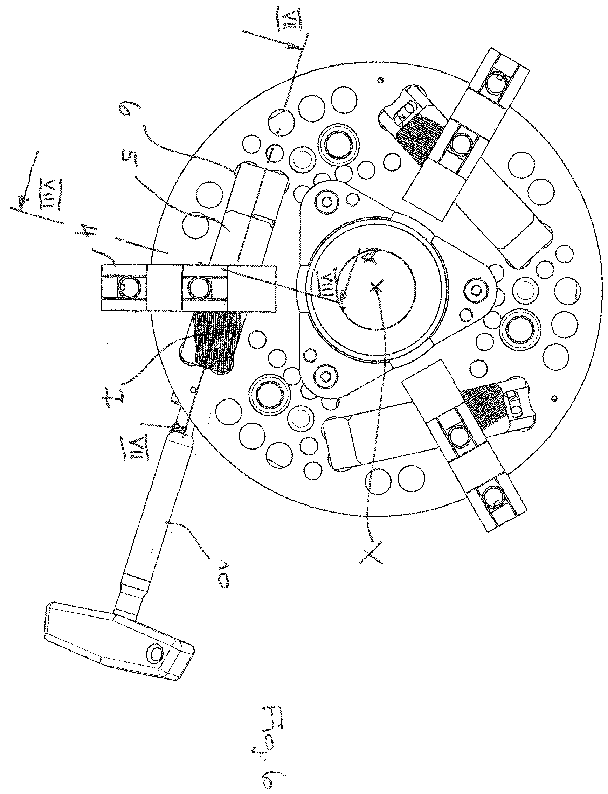

Anschließend wird der Ausklinkschlüssel 10 im Uhrzeigersinn in seine Freigabestellung verdreht (siehe Figuren 6 bis 8), so dass die Keilstange 5 durch den Eingriff von Steuerstift 15 und Steuernut 14 aus ihrem Arbeitsbereich über die äußere Arbeitsstellung hinaus hinter der Spannbacke 4 in ihre Backenwechselstellung soweit weggezogen wird, dass die Zahnleiste 7 der Keilstange 5 außerhalb des Bereiches der Führungsnut 3 liegt und somit die Spannbacke 4 aus der Führungsnut 3 gezogen werden kann. Dabei wird der Arretierungsstift 16 manuell über den betätigten Ausklinkschlüssel 10 in seiner Freigabestellung gehalten.

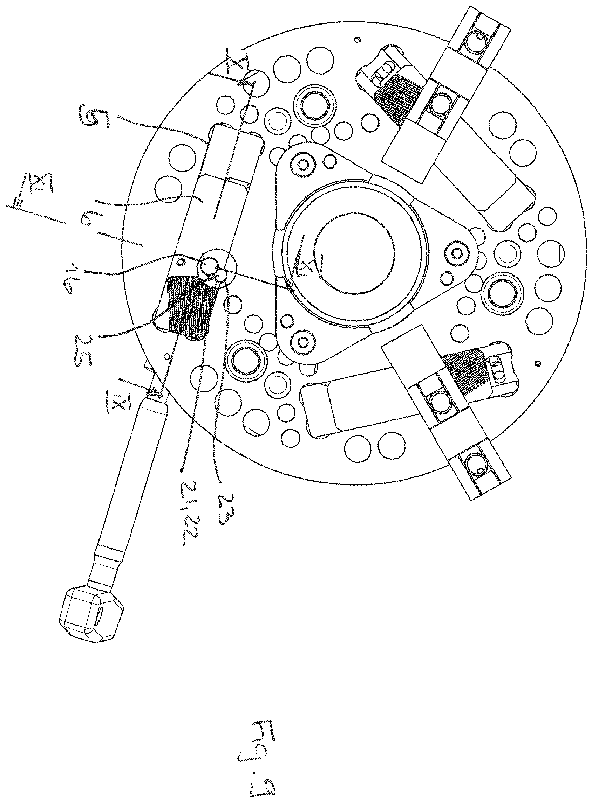

Wenn nach dem Entnehmen der Spannbacke 4 der Ausklinkschlüssel 10 wieder im entgegengesetzten Uhrzeigersinn zurückgedreht wird, wird der Arretierungsstift 16 durch die Wirkung der Schraubendruckfeder 18 in seine Arretierungsstellung aus der Keilstange 5 in den Bereich der Führungsnut 3 bewegt, wie dies in den Figuren 9 bis 11 erkennbar ist. Dabei kommt die Vertiefung 21 in der Seitenfläche des Arretierungsstiftes 16 außer Überdeckung von der Durchgangsöffnung 22 der Keilstange 5 und der Ausnehmung 23 in der Seitenwand der Keilstangentasche 6 mit dem Ergebnis, dass die Kugel 25 in den von der Durchgangsöffnung 22 und der Ausnehmung 23 gebildeten Teil der Ausnahme 24 gedrückt wird und damit eine Bewegung der Keilstange 5 in der Keilstangentasche 6 verhindert.

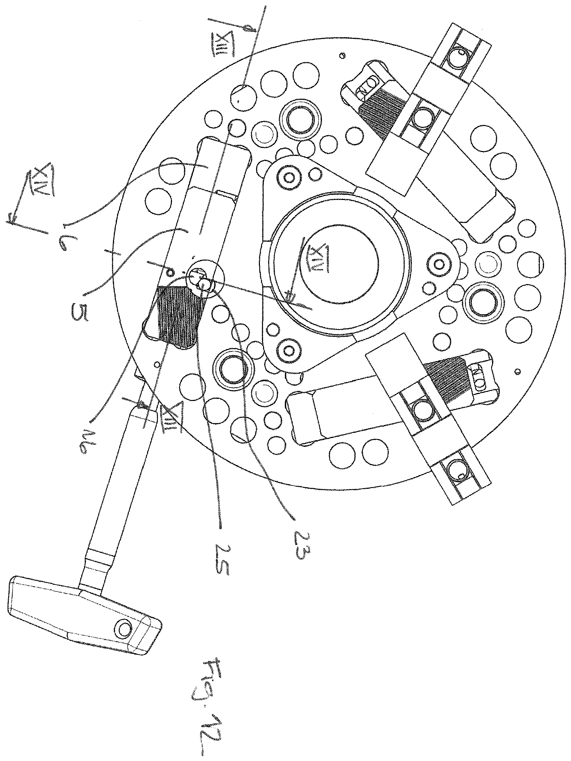

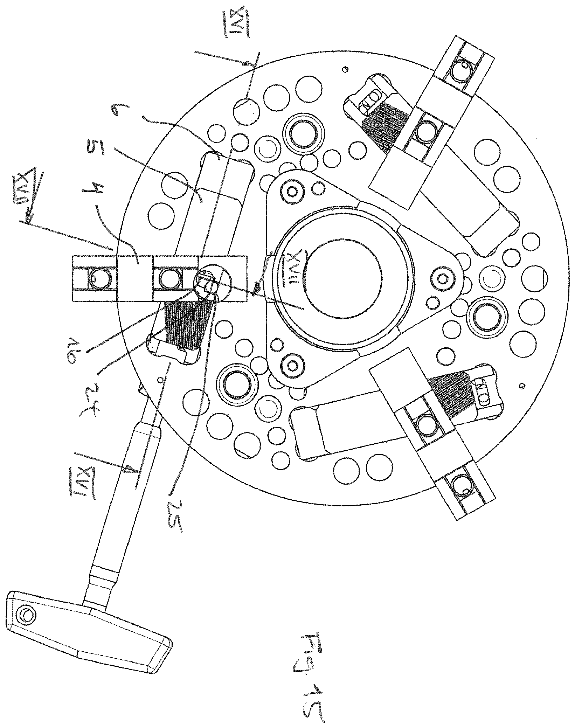

Zum Einsetzen einer Spannbacke 4 muss der Ausklinkschlüssel 10 erst wieder im Uhrzeigersinn in seine Freigabestellung gedreht werden, um den Arretierungsstift 16 durch den Eingriff des Betätigungsstiftes mit der Ausnehmung 23 in seine Freigabestellung abzusenken, wie dies in den Figuren 12 bis 14 dargestellt ist (siehe Figuren 15 bis 17). Anschließend kann die Keilstange 5 durch Verdrehen des Ausklinkschlüssels 10 im entgegengesetzten Uhrzeigersinn in seine Freigabestellung wieder in ihre äußere Arbeitsstellung gebracht werden.

### Bezugszeichenliste

(1) Futterkörper
(2) Durchlass
(3) Führungsnuten
(4) Spannbacken
(5) Keilstangen
(6) Keilstangentaschen
(7) Zahnleiste
(8) Verzahnung
(9) Ausklinkbolzen
(9a) Endabschnitt
(10) Ausklinkschlüssel
(11) Haltebohrung
(12) Schlüsselfläche
(13) Aufnahmebohrung
(14) Steuernut
(14a bis 14c) Nutabschnitte
(15) Steuerstift
(16) Arretierungsstift
(17) Bohrung
(18) Schraubendruckfeder
(19) Eingriffsmittel des Ausklinkbolzens
(20) Eingriffsmittel des Arretierungsstiftes
(21) Vertiefung
(22) Durchgangsöffnung
(23) Ausnehmung
(24) Aufnahme
(25) Kupplung

## Patentansprüche

1. Spannfutter mit einem Futterkörper (1), der eine Futterachse definiert, mehreren radial zu der Futterachse verlaufenden Führungsnuten (3), die in einer vorderen Stirnfläche des Futterkörpers ausgebildet sind und zur Aufnahme von Spannbacken (4) dienen, einem Keilstangenmechanismus zur Betätigung der Spannbacken mit mehreren Keilstangen (5), die in quer zu den Führungsnuten (3) verlaufenden Keilstangentaschen (6) des Futterkörpers (1) geradlinig bewegbar geführt und durch einen Antrieb in einem Arbeitsbereich zwischen einer inneren Arbeitsstellung, die einer inneren Spannstellung der Spannbacken (4) entspricht, und einer äußeren Arbeitsstellung, die einer äußeren Spannstellung der Spannbacken (4) entspricht, verstellbar sind, wobei die Keilstangen (5) an ihrer vorderen Stirnfläche eine schrägverzahnte Zahnleiste (7) aufweisen, die mit einer korrespondierenden Verzahnung (8) einer in die entsprechende Führungsnut (3) eingesetzten Spannbacke (4) in Eingriff steht bzw. bringbar ist, um eine Bewegung der Keilstangen (5) in eine Radialbewegung der Spannbacken (4) umzusetzen, und wobei den Keilstangen (5) jeweils ein Sicherungsmechanismus zugeordnet ist, der in der Weise ausgebildet ist, dass eine Keilstange (5) und eine zugehörige Spannbacke (4) nur in oder außer Eingriff gebracht werden können, wenn die Keilstange (5) über den Antrieb in ihre äußere Arbeitsstellung verfahren sind und zusätzlich manuell ein in dem Futterkörper (1) drehbar gehaltener Ausklinkbolzen (9) des zugeordneten Sicherungsmechanismus mittels eines entsprechenden Ausklinkschlüssels (10), der von außen mit dem Ausklinkbolzen (9) in Eingriff gebracht wird, aus einer Ausgangsstellung in eine Freigabestellung verdreht wird, **dadurch gekennzeichnet, dass** der Ausklinkbolzen (9) in einer Haltebohrung (11) des Futterkörpers (1), die sich in der Längsrichtung der korrespondierenden Keilstange (5) erstreckt, um seine Längsachse drehbar aber axialfest angeordnet ist, dass ein in das Innere des Futterkörpers (1) weisender Endabschnitt (9a) des Ausklinkbolzens (9) in eine Aufnahmebohrung (13) der zugehörigen Keilstange (5) drehbar eingreift, wobei in der Umfangsfläche des Endabschnittes (9a) eine Steuernut (14) ausgebildet ist, die mit einem in der Keilstange (5) gehaltenen und in die Aufnahmebohrung (13) ragenden Steuerstift (15) derart in Eingriff steht, dass eine Drehung des Ausklinkbolzens (9) aus seiner Ausgangsstellung in seine Freigabestellung dazu führt, dass die Keilstange (5) aus ihrem Arbeitsbereich über die äußere Arbeitsstellung hinaus hinter der Spannbacke (4) in eine Backenwechselstellung so weit weggezogen wird, dass die Zahnleiste (7) der Keilstange (5) außerhalb des Bereiches der Führungsnut (3) liegt und somit eine Spannbacke (4) aus der Führungsnut (3) gezogen oder in die Führungsnut (3) eingesetzt werden kann, und dass der Sicherungsmechanismus Arretierungsmittel aufweist, die verhindern, dass die Keilstange (5) aus ihrer Backenwechselstellung durch Drehen des Ausklinkbolzens wieder in ihre äußere Arbeitsstellung gebracht wird, ohne dass eine Spannbacke (4) in die Führungsnut (3) eingesetzt ist.

2. Spannfutter nach Anspruch 1, **dadurch gekennzeichnet, dass** der Steuerstift (15) sich in Futterachsrichtung von der hinteren Stirnfläche der Keilstange (5) in die Aufnahmebohrung (13) erstreckt.

3. Spannfutter nach Anspruch 1 oder 2, **dadurch gekennzeichnet, dass** eine Drehung des Ausklinkbolzens (9) aus der Ausgangsstellung in die Freigabestellung in einem ersten Drehbereich dazu führt, dass die Keilstange (5) aus ihrer äußeren Arbeitsstellung in die Backenwechselstellung bewegt wird, und ein Weiterdrehen des Ausklinkbolzens (9) innerhalb eines zweiten Drehbereichs in die Freigabestellung keine weitere Verstellung der Keilstange (5) in der Keilstangentasche (6) nach sich zieht.

4. Spannfutter nach Anspruch 3, **dadurch gekennzeichnet, dass** die Steuernut (14) einen ersten Nutabschnitt (14a), der sich in der Weise wendelartig entlang eines Umfangsabschnitts des inneren Endabschnitts (9a) des Ausklinkbolzens (9) erstreckt, dass die zugehörige Keilstange (5) bei einer Drehung des Ausklinkbolzens (9) in der Keilstangentasche (6) zwischen der äußeren Arbeitsstellung und der Backenwechselstellung bewegt wird, und einen zweiten Nutabschnitt (14b), welcher sich an den ersten Nutabschnitt (14a) anschließt und sich in Umfangsrichtung des Ausklinkbolzens (9) erstreckt, so dass eine weitere Drehung des Ausklinkbolzens (9) in die Freigabestellung zu keiner Bewegung der Keilstange (5) der zugehörigen Keilstangentasche (6) führt, aufweist.

5. Spannfutter nach einem der vorherigen Ansprüche, **dadurch gekennzeichnet, dass** die Arretierungsmittel einen Arretierungsstift (16) aufweisen, der in einer sich in Futterachsrichtung (X) erstreckenden und zur vorderen Stirnfläche der Keilstange (5) offenen Bohrung (17) der Keilstange (5) verschiebbar zwischen einer Arretierungsstellung, in welcher der Arretierungsstift (16) nach vorne aus der Bohrung (17) ragt, und einer abgewandten Freigabestellung, in welcher der Arretierungsstift (16) innerhalb der Bohrung (17) positioniert ist, bewegbar gehalten ist, wobei elastische Druckmittel insbesondere in Form einer Schraubendruckfeder (18), die sich zwischen einem Boden der Bohrung (17) und dem Arretierungsstift (16) abstützen, vorgesehen sind und den Arretierungsstift (16) nach vorne aus der Keilstange (5) in die Arretierstellung drücken, und wobei die Bohrung (17) vor der Zahnleiste (7) positioniert ist, so dass der Arretierungsstift (16) in den Bereich der Führungsnut (3) gedrückt wird, wenn sich die Keilstange (5) in ihrer Backenwechselstellung befindet.

6. Spannfutter nach Anspruch 5, **dadurch gekennzeichnet, dass** an dem inneren Ende des Ausklinkbolzens (9) Eingriffsmittel (19) ausgebildet sind, die mit entsprechenden Eingriffselementen (20) des Arretierungsstiftes (16) in Eingriff kommen, wenn sich die Keilstange (5) in ihrer Backenwechselstellung befindet, wobei dann eine Drehung des Ausklinkbolzens (9) in die Freigabestellung durch den Eingriff in eine Absenkbewegung des Arretierungsstiftes (16) in seine Freigabestellung umgesetzt wird.

7. Spannfutter nach Anspruch 5 oder 6, **dadurch gekennzeichnet, dass** in dem Arretierungsstift (16) eine Vertiefung (21) ausgebildet ist, dass die die Bohrung (17) zu einer Seitenfläche begrenzende Wandung der Keilstange (5) mit einer Durchgangsöffnung (22) versehen ist und dass in einer der Seitenfläche der Keilstange (5) zugeordneten Seitenwand der entsprechenden Keilstangentasche (6) eine Ausnehmung (23) ausgebildet ist, wobei die Vertiefung (21), die Durchgangsöffnung (22) und die Ausnehmung (23) gemeinsam eine Aufnahme (24) bilden, wenn sich der Arretierungsstift (16) in seiner Freigabestellung befindet, in welche eine Kugel (25) eingesetzt ist, und wobei die Kugel (25) durch den Arretierungsstift (16) nach außen in den von der Durchgangsöffnung (22) und der Ausnehmung (23) in der Seitenwand der Keilstangentasche (6) gebildeten Bereich der Aufnahme (24) gedrückt wird, wenn sich der Arretierungsstift (16) in seiner Arretierungsstellung befindet und somit seine Vertiefung (21) gegenüber der Durchgangsöffnung (22) der Ausnehmung (23) versetzt ist, so dass dann die Kugel (25) ein Verstellen der Keilstange (5) in der Keilstangentasche (6) verhindert.

## Claims

1. Clamping chuck comprising a chuck body (1) defining a chuck axis, a plurality of guide grooves (3) extending radially to the chuck axis, which are formed in a front end face of the chuck body and serve to receive clamping jaws (4), a wedge rod mechanism for actuating the clamping jaws with a plurality of wedge rods (5), which are guided movably in a straight line in wedge rod pockets (6) of the chuck body (1) extending transversely to the guide grooves (3) and can be adjusted by a drive in a working area between an inner working position, which corresponds to an inner clamping position of the clamping jaws (4), and an outer working position which corresponds to an outer clamping position of the clamping jaws (4), the wedge rods (5) having at their front end face a helically toothed toothed strip (7) which engages or can be engaged with a corresponding toothing (8) of a clamping jaw (4) inserted into the corresponding guide groove (3) in order to convert a movement of the wedge rods (5) into a radial movement of the clamping jaws (4), and wherein each wedge rod (5) has assigned thereto a securing mechanism which is designed in such a way that a wedge rod (5) and an associated clamping jaw (4) can only be brought into or out of engagement, when the wedge rod (5) is moved via the drive into its outer working position and in addition a notching pin (9) of the associated safety mechanism rotatably held in the chuck body (1) is manually rotated from a starting position into a release position by means of a corresponding notching key (10) which is brought into engagement with the notching pin (9) from the outside, **characterized in that** the notching pin (9) is arranged so as to be rotatable about its longitudinal axis but axially fixed in a retaining bore (11) of the chuck body (1), which extends in the longitudinal direction of the corresponding wedge rod (5), that an end portion (9a) of the notching pin (9) facing into the interior of the chuck body (1) engages rotatably in a receiving bore (13) of the asso-dated wedge rod (5), a control groove (14) being formed in the peripheral surface of the end section (9a), which is engaged with a control pin (15) held in the wedge rod (5) and projecting into the receiving bore (13) such that a rotation of the notching pin (9) from its starting position into its release position causes the wedge rod (5) to be pulled so far away from its working area beyond the outer working position behind the clamping jaw (4) into a jaw changing position, so that the toothed strip (7) of the wedge rod (5) lies outside the region of the guide groove (3) and a clamping jaw (4) can thus be pulled out of the guide groove (3) or inserted into the guide groove (3), and that the securing mechanism has locking means which prevent the wedge rod (5) from being returned from its jaw change position to its outer working position by turning the notching pin, without a clamping jaw (4) being inserted into the guide groove (3).

2. Clamping chuck according to claim 1, **characterized in that** the control pin (15) extends in the chuck axis direction from the rear end face of the wedge rod (5) into the receiving bore (13).

3. Clamping chuck according to claim 1 or 2, **characterized in that** a rotation of the notching pin (9) from the starting position into the release position in a first rotary range causes the wedge rod (5) to be moved from its outer working position into the jaw change position, and a further rotation of the notching pin (9) within a second rotary range into the release position does not cause any further adjustment of the wedge rod (5) in the wedge rod pocket (6).

4. Clamping chuck according to claim 3, **characterized in that** the control groove (14) comprises a first groove portion (14a) extending helically along a peripheral portion of the inner end portion (9a) of the notching pin (9) such that the associated wedge rod (5) is moved between the outer working position and jaw change position upon rotation of the notching pin (9) in the wedge rod pocket (6), and a second groove portion (14b) adjoining the first groove portion (14a) and extending in the circumferential direction of the notching pin (9) so that further rotation of the notching pin (9) into the release position does not cause the wedge rod (5) of the associated wedge rod pocket (6) to move.

5. Clamping chuck according to one of the previous claims, **characterized in that** the locking means have a locking pin (16) which is displaceable in a bore (17) of the wedge rod (5) extending in the chuck axis direction (X) and open to the front end face of the wedge rod (5) between a locking position in which the locking pin (16) projects forward out of the bore (17) and a remote release position in which the locking pin (16) is positioned within the bore (17), elastic pressure means, in particular in the form of a helical compression spring (18) supported between a bottom of the bore (17) and the locking pin (16), being provided and pushing the locking pin (16) forward out of the wedge rod (5) into the locking position, and the bore (17) being positioned in front of the toothed strip (7) so that the locking pin (16) is pressed into the area of the guide groove (3) when the wedge rod (5) is in its jaw changing position.

6. Clamping chuck according to claim 5, **characterized in that** engagement means (19) are formed at the inner end of the notching pin (9) which engage with corresponding engagement elements (20) of the locking pin (16) when the wedge rod (5) is in its jaw changing position, wherein then a rotation of the notching pin (9) into the release position is converted into its release position by the engagement into a lowering movement of the locking pin (16).

7. Clamping chuck according to claim 5 or 6, **characterized in that** a recess (21) is formed in the locking pin (16), that the wall of the wedge rod (5) defining the bore (17) to a side surface is provided with a through opening (22) and that a recess (23) is formed in a side wall of the corresponding wedge rod pocket (6) assigned to the side surface of the wedge rod (5), the recess (21), the through opening (22) and the recess (23) together forming a receptacle (24) when the locking pin (16) is positioned in its release position, into which a ball (25) is inserted, and the ball (25) being pressed outwards through the locking pin (16) into the region of the receptacle (24) formed by the through opening (22) and the recess (23) in the side wall of the wedge rod pocket (6), when the locking pin (16) is in its locking position and thus its recess (21) is offset from the through opening (22) of the recess (23), so that the ball (25) then prevents the wedge rod (5) from moving in the wedge rod pocket (6).

## Revendications

1. Mandrin de serrage comprenant un corps de mandrin (1) définissant un axe de mandrin, une pluralité de rainures de guidage (3) s'étendant radialement à l'axe de mandrin, qui sont formées dans une face frontale du corps de mandrin et servent à recevoir des mâchoires de serrage (4), un mécanisme de tringle de cale pour actionner les mâchoires de serrage avec une pluralité de tringles de cale (5), qui sont guidées de manière déplaçable en ligne droite dans des poches de tringle de cale (6) du corps de mandrin (1) s'étendant transversalement aux rainures de guidage (3) et ajustées par un entraînement dans une zone de travail entre une position de travail intérieure, qui correspond à une position de serrage intérieure des mâchoires de serrage (4), et une position de travail extérieure qui correspond à une position de serrage extérieure des mâchoires de serrage (4), les tringles de cale (5) ayant sur leur face frontale une bande dentée hélicoïdale (7) qui s'engage ou peut s'engager avec une denture correspondante (8) d'une mâchoire de serrage (4) insérée dans la rainure de guidage correspondante (3) pour transformer un mouvement des tringles de cale (5) en un mouvement radial des mâchoires de serrage (4), et chaque tringle de cale (5) ayant associée un mécanisme de fixation qui est conçu de telle sorte qu'une tringle de cale (5) et une mâchoire de serrage (4) associée ne peuvent être mises en engagement ou hors engagement, lorsque la tringle de cale (5) est déplacée via l'entraînement dans sa position de travail extérieure et, en outre, un boulon d'encoche (9) du mécanisme de sécurité associé, maintenue en rotation dans le corps de mandrin (1), est tournée manuellement d'une position de départ dans une position de déblocage au moyen d'une clé d'encoche correspondante (10) qui est mise en prise avec le boulon d'encoche (9) depuis l'extérieur, **caractérisé en ce que** le boulon d'encoche (9) est disposé de manière à pouvoir tourner autour de son axe longitudinal mais fixé axialement dans un alésage de retenue (11) du corps de mandrin (1), qui s'étend dans la direction longitudinale de la tringle de cale correspondante (5), qu'une partie d'extrémité (9a) du boulon d'encoche (9) tournée vers l'intérieur du corps de mandrin (1) s'engage de manière rotative dans un alésage de réception (13) de la tringle de cale associée (5), une rainure de commande (14) étant formée dans la surface périphérique de la section d'extrémité (9a), qui est en engagement avec une tige de commande (15) maintenue dans la tringle de cale (5) et faisant saillie dans l'alésage de réception (13) de telle sorte qu'une rotation du boulon d'encoche (9) de sa position de départ dans sa position de déblocage entraîne la tringle de cale (5) à être tirée si loin de sa zone de travail au-delà de la position de travail extérieure derrière la mâchoire de serrage (4) dans une position de changement de mâchoire, que la bande dentée (7) de la tringle de cale (5) se trouve à l'extérieur de la zone de la rainure de guidage (3) et une mâchoire de serrage (4) peut ainsi être retirée de la rainure de guidage (3) ou insérée dans la rainure de guidage (3), et que le mécanisme de fixation comporte des moyens de verrouillage qui empêchent la tringle de cale (5) d'être ramenée de sa position de changement de mâchoire à sa position de travail extérieure en tournant la goupille d'encoche, sans qu'une mâchoire de serrage (4) soit insérée dans la rainure de guidage (3).

2. Mandrin de serrage selon la revendication 1, **caractérisé en ce que** la tige de commande (15) s'étend dans la direction de l'axe du mandrin à partir de la face arrière de la tringle de cale (5) dans l'alésage de réception (13).

3. Mandrin de serrage selon la revendication 1 ou 2, **caractérisé en ce qu'**une rotation du boulon d'encoche (9) de la position de départ dans la position de déblocage dans une première plage de rotation entraîne le déplacement de la tringle de cale (5) de sa position de travail extérieure dans la position de changement de mâchoire, et une autre rotation du boulon d'encoche (9) dans une deuxième plage de rotation dans la position de déblocage n'entraîne aucun autre ajustement de la tringle de cale (5) dans la poche de la tringle de cale (6).

4. Mandrin de serrage selon la revendication 3, **caractérisé en ce que** la rainure de commande (14) comprend une première partie de rainure (14a) s'étendant en hélice le long d'une partie périphérique de la partie d'extrémité intérieure (9a) du boulon d'encoche (9) de telle sorte que la tringle de cale associée (5) est déplacée entre la position de travail extérieure et la position de changement de mâchoire lorsque le boulon d'encoche (9) est tourné dans la poche de tringle de cale (6), et une deuxième partie de rainure (14b) adjacente à la première partie de rainure (14a) et s'étendant dans la direction circonférentielle de le boulon d'encoche (9) de sorte qu'une rotation supplémentaire de le boulon d'encoche (9) dans la position de libération n'entraîne pas le déplacement de la tringle de cale (5) de la poche de tringle de cale associée (6).

5. Mandrin de serrage selon l'une des revendications précédentes, **caractérisé en ce que** les moyens de verrouillage comportent une goupille de verrouillage (16) qui, dans un alésage (17) de la tringle de cale (5) s'étendant dans la direction de l'axe du mandrin (X) et ouverte sur la face frontale avant de la tringle de cale (5), peut être déplacée entre une position de verrouillage dans laquelle la goupille de verrouillage (16) dépasse de l'alésage (17) et une position de déblocage à distance dans laquelle la goupille de verrouillage (16) est positionnée à l'intérieur de l'alésage (17), des moyens de pression élastiques, en particulier sous la forme d'un ressort de compression hélicoïdal (18) supporté entre un fond de l'alésage (17) et la goupille de verrouillage (16), étant prévus et poussant la goupille de verrouillage (16) vers l'avant hors de la tringle de cale (5) dans la position de verrouillage, et dans lequel l'alésage (17) est positionné devant la bande dentée (7) de sorte que la goupille de verrouillage (16) est pressée dans la zone de la rainure de guidage (3) lorsque la tringle de cale (5) est dans sa position de changement de mâchoire.

6. Mandrin de serrage selon la revendication 5, **caractérisé en ce que** des moyens d'engagement (19) sont formés à l'extrémité intérieure du boulon d'encoche (9) qui s'engagent avec des éléments d'engagement correspondants (20) de la goupille de verrouillage (16) lorsque la tringle de cale (5) est dans sa position de changement de mâchoire, dans lequel une rotation du boulon d'encoche (9) dans la position de déblocage est convertie dans sa position de déblocage par l'engagement dans un mouvement d'abaissement de la goupille de verrouillage (16).

7. Mandrin de serrage selon la revendication 5 ou 6, **caractérisé en ce qu'**un évidement (21) est formé dans la goupille de verrouillage (16), que la paroi de la tringle de cale (5) définissant l'alésage (17) à une surface latérale est munie d'une ouverture de passage (22) et qu'un évidement (23) est formé dans une paroi latérale de la poche de tringle de cale correspondante (6) affectée à la surface latérale de la tringle de cale (5), l'évidement (21), l'ouverture de passage (22) et l'évidement (23) formant ensemble un réceptacle (24) lorsque la goupille de verrouillage (16) est dans sa position de libération, dans laquelle une bille (25) est insérée, et la bille (25) étant pressée vers l'extérieur à travers la goupille de verrouillage (16) dans la région du réceptacle (24) formée par l'ouverture de passage (22) et l'évidement (23) dans la paroi latérale de la poche de tringle de cale (6), lorsque la goupille de verrouillage (16) est dans sa position de verrouillage et donc son évidement (21) est décalé par rapport à l'ouverture traversante (22) de l'évidement (23), de sorte que la bille (25) empêche ensuite la tringle de cale (5) de se déplacer dans la poche de tringle de cale (6).
